# DEMANDE DE BREVET EUROPEEN

(11) **EP 1 248 419 A1**
(43) Date de publication de la demande: **09.10.2002**
(21) Numéro de dépôt: 02290557.4
(22) Date de dépôt: 06.03.2002
(51) Int. Cl.: H04L 12/56, H04L 12/28, H04L 29/06

(54) **Procédé et dispositif de transmission de données numériques**

(30) Priorité: 03.04.2001 FR 0104517
(71) Demandeur: Sagem S.A., 75015 Paris (FR)
(72) Inventeur: Perrot, Thierry, 95880 Enghien Les Bains (FR)
(74) Mandataire: Loisel, Bertrand

(57) **Abrégé**

Le procédé comprend des actions consistant à enregistrer des données dans une station éloignée (16) à un débit utile auquel elles y sont générées, sélectionner à un instant choisi, un débit adapté à une bande passante de canal de transmission (15), restituer au débit adapté les dites données telles qu'elles ont été enregistrées dans la station éloignée (16) et transmettre sur le canal de transmission (15) à destination d'une station de base (17), lesdites données restituées. Le dispositif comprend dans la station éloignée (16), une mémoire (21) pour enregistrer des données au débit utile auquel elles sont générées, des moyens (23) pour restituer les données enregistrées à un débit adapté à une bande passante du canal de transmission (15) et un sélecteur (19) agencé pour être télécommandé à un instant choisi de façon à transmettre au débit adapté sur le canal de transmission (15), les données restituées de la mémoire (21).

## Description

Le domaine de l'invention est celui de la transmission de données numériques depuis une station éloignée à destination d'une station de base.

Les données numériques sont générées en temps réel dans la station éloignée. Elles concernent par exemple des images animées prises par une caméra vidéo, des relevés de mesures sur un phénomène physique qui évolue dans le temps.

Pour observer ces images animées ou de façon générale le phénomène physique mesuré dans la station éloignée, les données numériques sont transmises à la station de base au moyen d'un canal de transmission entre la station éloignée et la station de base.

Lorsque la bande passante du canal de transmission n'est pas suffisante pour transmettre l'intégralité des données en temps réel, une technique connue consiste à comprimer les données numériques avec un taux de compression adapté à la bande passante du canal.

Le taux de compression influe sur la qualité de l'information reçue dans la station de base. Plus la bande passante est faible, plus le taux de compression est élevé de façon à assurer un débit de transmission de l'information en synchronisme avec le débit utile auquel les données numériques sont générées en temps réel dans la station éloignée. Lorsque le taux de compression est élevé, la qualité de l'information se dégrade, moins bonne définition d'une image, moindre précision de mesures relevées. Ceci présente des inconvénients lorsqu'on veut analyser finement des images ou une évolution de mesures physiques.

Pour palier les inconvénients de l'état connu de la technique, un premier objet de l'invention est un procédé pour transmettre sur un canal de transmission, des données numériques générées en temps réel à un débit utile dans une station éloignée, à destination d'une station de base. Le procédé est caractérisé en ce qu'il comprend des actions consistant à :
- enregistrer lesdites données au débit utile dans la station éloignée ;
- sélectionner à un instant choisi, un débit adapté à une bande passante du canal de transmission ;
- restituer au débit adapté, lesdites données telles qu'elles ont été enregistrées dans la station éloignée ;
- transmettre sur le canal de transmission, lesdites données restituées.

L'enregistrement des données au débit utile dans la station éloignée, indépendamment de la bande passante du canal de transmission, permet d'y conserver les données numériques en pleine précision. La restitution des données enregistrées à un débit adapté à la bande passante du canal de transmission permet d'obtenir ces données en pleine précision lorsqu'elles sont transmises à la station de base. La sélection du débit adapté, à un instant choisi, permet de transmettre les données au moment le plus approprié pour les obtenir en pleine précision dans la station de base. Ce moment approprié est par exemple celui où la bande passante du canal favorise un débit adapté qui soit maximal ou celui auquel il est souhaité d'avoir la précision maximale malgré un débit adapté plus lent, ou encore celui où la bande passante du canal n'a pas besoin d'être utilisée pour transmettre d'autres données.

De façon avantageuse, le procédé comprend en outre des actions consistant à :
- filtrer les données pour passer d'un débit utile à un débit utile réduit correspondant à la bande passante du canal ;
- sélectionner le débit utile réduit avant l'instant choisi ;
- transmettre au débit utile réduit sur le canal de transmission, lesdites données générées en temps réel.

Le filtrage adapté à la bande passante du canal peut-être exécuté en permanence de façon à permettre la transmission sur le canal dans les meilleures conditions.

Lorsque le débit utile est sélectionné avant l'instant choisi, la bande passante du canal peut nécessiter un filtrage tel que la pleine précision des données ne puisse être obtenue dans la station de base. Cependant, la transmission des données au débit utile réduit permet d'obtenir ces données dans la station de base en temps réel et de pouvoir ainsi réagir rapidement depuis la station de base sans perdre de temps sur les détails.

Ainsi, les actions de sélection selon le procédé conforme à l'invention, permettent d'adapter le filtrage ou le débit en fonction d'un but recherché, meilleure précision ou meilleure rapidité de transmission, en réceptionnant dans la station de base, les données au débit auquel elles sont transmises.

Si les données sont réceptionnées dans la station de base au débit auquel elles sont transmises, on observe une expansion temporelle, par exemple ralenti d'images, lorsque le débit adapté est plus lent que le débit utile.

Selon une caractéristique avantageuse, le procédé comprend en outre des actions consistant à enregistrer dans la station de base les données transmises au débit adapté.

Ceci permet de restituer au débit utile les données telles qu'elles ont été enregistrées dans la station de base. Ceci permet aussi de mettre en oeuvre d'autres actions telles que celles consistant à libérer les ressources de réception pour réceptionner par exemple à nouveau des données en temps réel.

En réceptionnant dans la station de base, les données restituées au débit utile, il est possible d'obtenir en différé ces données telles qu'elles évoluent en temps réel et ceci avec une grande précision.

Un deuxième objet de l'invention est un dispositif pour transmettre sur un canal de transmission, des données numériques générées en temps réel à un débit utile dans une station éloignée, à destination d'une station de base. Le dispositif est caractérisé en ce qu'il comprend dans la station éloignée :
- une première mémoire pour enregistrer lesdites données au débit utile ;
- des premiers moyens pour restituer lesdites données à un débit adapté à une bande passante du canal de transmission ;
- un premier sélecteur agencé pour être télécommandé à un instant choisi de façon à transmettre au débit adapté sur le canal de transmission, les données restituées de la première mémoire.

La première mémoire permet de conserver dans la station éloignée, des données jugées particulièrement intéressantes et ceci en pleine précision car elles y sont enregistrées au débit utile, indépendamment de la bande passante du canal de transmission. Les premiers moyens permettent de restituer les données enregistrées à un débit adapté qui n'est pas nécessairement le débit utile. La télécommande du premier sélecteur permet de choisir un instant pour transmettre les données jugées particulièrement intéressantes, par exemple en différé à la place de données jugées moins intéressantes.

De façon avantageuse, le premier sélecteur est agencé pour transmettre les données filtrées au débit utile réduit lorsqu'il n'est pas télécommandé pour les transmettre au débit adapté, et lorsque la rapidité est préférée à la précision.

De nombreux détails et avantages de l'invention seront mieux compris dans la description qui suit d'un exemple préféré de réalisation, en référence aux dessins annexés dans lesquels :
- la figure 1 illustre des actions de procédé conforme à l'invention, exécutées dans la station éloignée ;
- la figure 2 illustre des actions de procédé conforme à l'invention, exécutées dans la station de base ;
- la figure 3 illustre un dispositif conforme à l'invention.

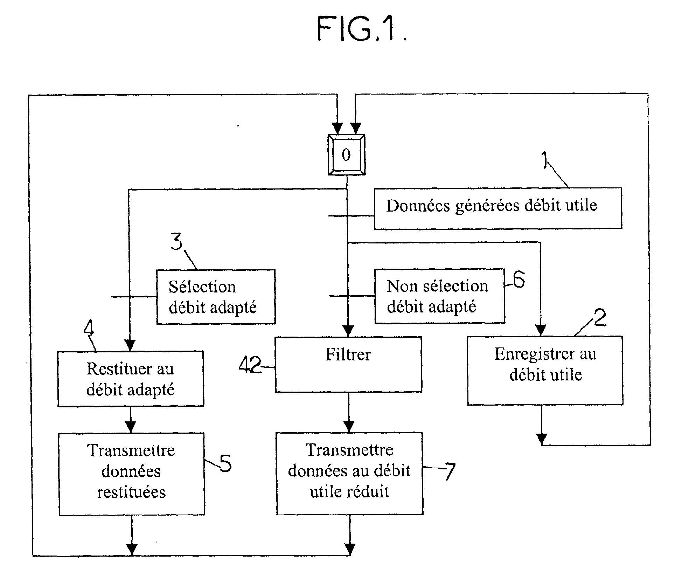

En référence à la figure 1, une action 1 a pour effet de générer en temps réel des données numériques à un débit utile dans une station éloignée. Lorsqu'elles concernent des images animées, les données numériques sont par exemple générées au moyen d'une caméra couplée à un compresseur vidéo codant les images au débit utile. Le compresseur permet de réduire le débit des images provenant de la caméra en supprimant les informations les moins perceptibles à l'oeil. Plus le taux de compression est grand, plus les effets de la compression sont perceptibles. Lorsqu'elles concernent des relevés de grandeurs physiques telles que température, pression ou autres, les données numériques sont par exemple générées au moyen de capteurs adaptés à la mesure et d'éventuels convertisseurs analogiques-numériques. Le débit utile est celui qui permet de restituer les valeurs mesurées et leur évolution temporelle avec toute la précision permise par les capteurs.

Une action 2 consiste à enregistrer les données numériques au débit auquel elles sont générées, et ceci dans la station éloignée.

A un instant choisi depuis la station de base, une action 3 a pour effet de sélectionner un débit adapté à la bande passante d'un canal de transmission entre la station éloignée et la station de base. Si par exemple, la station éloignée est un avion de reconnaissance, un satellite, une sonde spatiale ou un robot mobile autonome, on utilise généralement une liaison radio comme support physique du canal destiné à transmettre les données numériques de la station éloignée à destination de la station de base. On sait que la bande passante du canal de transmission dépend alors de la distance qui sépare la station mobile de la station de base. La bande passante diminue lorsque la distance augmente parce que l'intensité des signaux radio reçus diminue et que ces signaux sont superposés à l'entrée du récepteur à un bruit thermique dont l'intensité est proportionnelle à la largeur du canal. Plus le rapport entre le signal reçu et le bruit thermique est faible, plus le débit transmissible sans erreur est faible, et donc plus la bande passante est réduite. Il est possible d'adapter un débit de transmission de données à un canal de transmission en effectuant des mesures de qualité sur un signal radio reçu dans la station de base. Parmi de nombreuses solutions connues, on peut citer celle qui consiste à émettre depuis la station de base une trame de bits à un débit déterminé en demandant à la station éloignée de réémettre cette trame au même débit déterminé puis d'asservir ce débit déterminé jusqu'à obtenir en retour dans la station de base, une trame avec un taux d'erreurs acceptable. La valeur du débit déterminé à ce moment constitue alors celle du débit adapté au canal de transmission pour transmettre les données générées dans la station éloignée en respectant un taux d'erreurs acceptable.

En sélectionnant le débit adapté à un moment choisi depuis la station de base, on garde dans la station de base la maîtrise de la transmission.

Lorsque le débit adapté est sélectionné, une action 4 consiste à restituer les données enregistrées dans la station éloignée, et ceci au débit adapté et à l'instant choisi. Comme nous le verrons dans la suite de la description, la restitution se fait par des moyens de lecture des données enregistrées commandés dans la station éloignée avec un rythme synchronisé sur le débit adapté, déclenché par la réception de la station de base, d'un signal de sélection de débit adapté transmis par radio.

Au fur et à mesure de la restitution, une action 5 consiste à transmettre les données restituées au débit adapté sur le canal de transmission, à destination de la station de base. La transmission est réalisée en modulant les trames de bits qui codent les données numériques sur une porteuse radio à une fréquence d'émission d'ondes électromagnétiques correspondant au canal de transmission.

Lorsque le débit adapté n'est pas sélectionné, on peut envisager de ne faire aucune transmission si on ne s'intéresse qu'à une transmission de bonne qualité avec un maximum de précision sur les données numériques.

Une action 6 présente un avantage supplémentaire. L'action 6 consiste à sélectionner le débit utile lorsque le débit adapté n'est pas sélectionné.

En sélectionnant le débit utile, les données prises en compte sont directement les données numériques telles qu'elles sont générées en temps réel.

L'action 6 déclenche alors une action 42 qui filtre les données pour passer du débit utile au débit utile réduit. Lorsque les données concernent des images animées, le filtrage consiste par exemple à supprimer des images complètes dans le flux. Il peut également consister par exemple à augmenter le taux de compression des images à transmettre. Lorsque les données concernent des mesures, le filtrage consiste par exemple à réduire la fréquence de rafraîchissement des données. Il peut également consister à réduire le format des données.

Le filtrage est adapté à la bande passante du canal de transmission, c'est à dire avec des paramètres qui permettent d'obtenir un signal exploitable en réception dans la station de base. Le choix du filtrage adapté est déclenché par l'action 6 ou réalisé de façon autoadaptative sur l'étage radio.

Une action 7 consiste à transmettre au débit utile réduit sur le canal de transmission les données numériques filtrées, générées en temps réel. La transmission est réalisée en modulant les trames de bits qui codent les données numériques sur un signal de porteuse radio à une fréquence d'émission d'ondes électromagnétiques correspondant au canal de transmission.

Lorsque la bande passante du canal de transmission est faible, par exemple à cause d'une distance considérable qui sépare la station éloignée de la station de base, le filtrage est fort. Ceci a pour effet de détériorer la qualité des données transmises, en particulier pour un débit utile rapide.

Cependant, ceci permet d'obtenir les données numériques en temps réel dans la station de base et d'avoir une vision rapide du processus observé dans la station éloignée. Il est alors possible de déterminer les données les plus importantes qui seront transmises ultérieurement ou immédiatement en pleine précision grâce aux actions 4 et 5.

Les actions 6, 42 et 7 permettent de réagir de façon réflexe sur le processus observé dans la station éloignée alors que les actions 3 à 5 permettent d'analyser finement le processus observé pour en tirer des conclusions de fond.

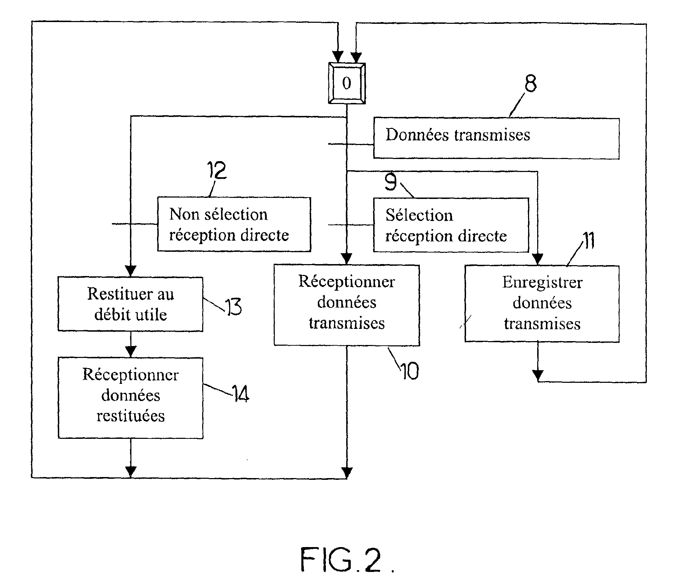

En référence à la figure 2, une action 8 a pour effet de recevoir les données transmises dans la station de base où sont exécutées d'autres actions à présent décrites.

Une action 9 consiste à sélectionner directement le flot de données tel qu'il est reçu dans la station de base pour réceptionner les données transmises dans une action 10.

Réceptionner consiste par exemple à décompresser puis afficher les données transmises sous forme graphique sur un écran de la station de base, images animées si les données concernent de la vidéo ou courbes temporelles si les données concernent d'autres valeurs physiques. Réceptionner peut aussi consister à mémoriser les données transmises dans une base de données ou à faire interagir ces données dans un processus temps réel exécuté depuis la station de base.

L'action 10 a pour effet de réceptionner les données, soit avec la précision permise par le canal de transmission si ces données sont transmises au débit utile, soit expansées dans le temps si ces données sont transmises au débit adapté, généralement plus lent que le débit utile, mais avec une meilleure précision. Dans le cas d'image vidéo, on observe alors un ralenti. Dans le cas d'autres valeurs physiques, les courbes sont dilatées sur l'axe du temps.

Une action 11 consiste à enregistrer les données transmises dans la station de base au fur et à mesure que celles-ci y sont reçues. Cet enregistrement permet de ne perdre aucune donnée lorsque le mode en réception directe n'est pas sélectionné. L'action 11 peut consister à enregistrer systématiquement toutes les données transmises qui sont reçues dans la station de base. De façon préférée, l'action 11 consiste à enregistrer au moins les données qui sont transmises au débit adapté, c'est-à-dire celles avec la meilleure précision et généralement expansées dans le temps.

Une action 12 consiste à déclencher des actions 13, 14 lorsque le mode en réception directe n'est pas sélectionné par l'action 9.

L'action 13 consiste à restituer au débit utile, les données qui ont été enregistrées dans la station de base par l'action 11. La restitution se fait par lecture des données mémorisées à un rythme synchronisé sur le débit utile.

L'action 14 consiste à réceptionner les données restituées au débit utile dans la station de base. Lorsque les données numériques concernent des images vidéo transmises en pleine précision au débit adapté, elles sont alors affichées sur un écran au débit utile, c'est-à-dire à vitesse normale, et avec une précision maximale.

L'enseignement de l'invention ne se limite pas à l'exemple de procédé qui vient d'être décrit. Par exemple, le canal de transmission n'utilise pas nécessairement une liaison radio mais peut aussi utiliser un réseau câblé pour lequel le débit transmissible varie dans le temps. La mémorisation dans la station éloignée permet d'obtenir une précision optimale de données observées indépendamment de la capacité du canal de transmission à l'instant où ces données sont observées.

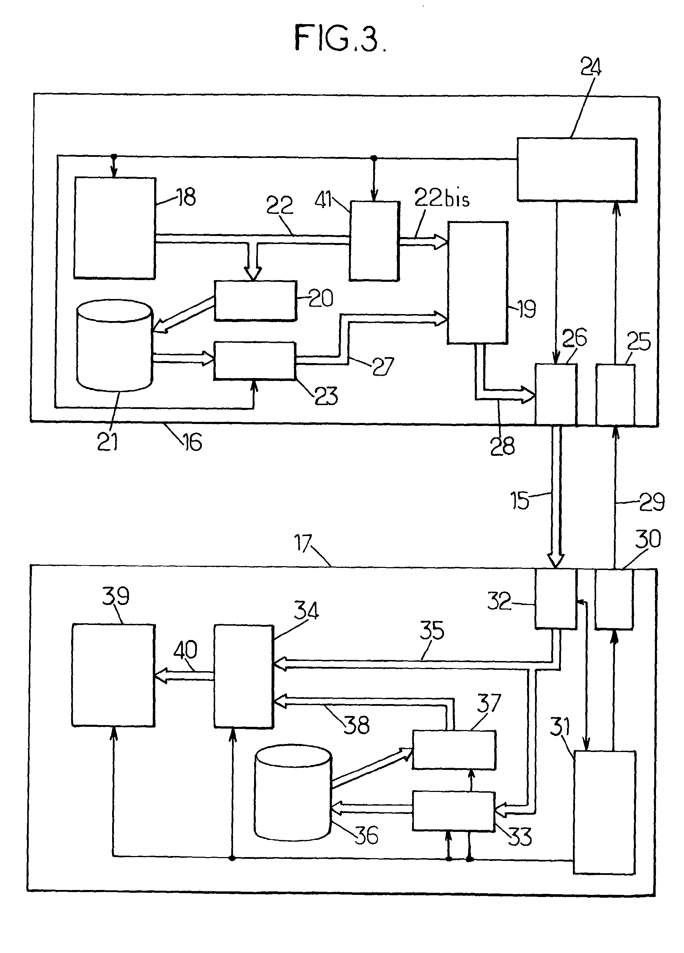

La figure 3 illustre un dispositif pour transmettre sur un canal de transmission 15, des données numériques générées dans une station éloignée 16, à destination d'une station de base 17.

Les données numériques sont générées en temps réel à un débit utile depuis une source 18. Lorsque les données numériques concernent des images vidéo, la source 18 comprend une caméra et un compresseur vidéo avec des moyens de génération connus de signal numérique sous forme de trames de bits. Lorsque les données numériques concernent d'autres grandeurs physiques, la source 18 comprend un ou plusieurs capteurs avec des moyens connus de génération de signal numériques sous forme de trames de bits.

La station 16 comprend un réducteur de débit 41 qui, dans le cas de la génération d'images vidéo, peut faire partie du compresseur vidéo, ou peut constituer un organe séparé qui agit sur le flux généré par le compresseur vidéo. Le réducteur de débit est piloté par l'organe de commande 24. La station 16 comprend d'autre part un sélecteur 19 et des moyens d'enregistrement 20, reliés à la source 18 par un bus de transfert 22 sur lequel les données générées par la source 18, circulent en temps réel au débit utile, c'est-à-dire avec toute la précision permise par la source de données 18. Les moyens d'enregistrement 20 sont agencés pour écrire dans une mémoire 21, les données qui circulent sur le bus 22 de la source 18 vers le sélecteur 19. Des moyens de restitution 23 sont agencés pour lire dans la mémoire 21, les données qui y sont enregistrées.

Les moyens de restitution 23 sont pilotés par un organe de commande 24 qui leur communique à un instant choisi un débit dit adapté pour lire des données de la mémoire 21 à cet instant choisi. L'organe de commande 24 dispose d'un registre destiné à contenir une valeur de débit adapté au canal de transmission 15. L'organe de commande 24 est relié à un récepteur 25 pour en recevoir différents signaux de commande tels que par exemple un ordre de déclenchement des moyens de restitution 23 et la valeur de débit adapté au canal de transmission 15.

Les moyens de restitution 23 sont reliés au sélecteur 19 par une liaison de transfert 27 pour transférer vers le sélecteur 19, les données restituées au débit adapté et à partir de l'instant choisi auquel les moyens de restitution 23 sont déclenchés par l'organe de commande 24.

Le sélecteur 19 est relié en sortie à un émetteur 26 par une liaison de transfert 28. Le sélecteur 19 connecte par défaut en entrée le bus de transfert 22bis à la liaison de transfert 28 de sorte que lorsque des données sont générées depuis la source 18, celles-ci sont filtrées par le réducteur de débit 41 puis transférées au débit utile réduit à l'émetteur 26. Le sélecteur 19 est piloté par l'organe de commande 24 de façon à connecter en entrée la liaison de transfert 27 à la liaison de transfert 28 lorsque l'organe de commande 24 déclenche les moyens de restitution 23. Ainsi, lorsque des données sont restituées depuis la mémoire 21, celles-ci sont transférées au débit adapté à l'émetteur 26.

La station de base 17 comprend un organe de commande 31 relié à un émetteur 30 pour télécommander le sélecteur 19 à un instant choisi depuis la station de base 17. Les signaux de télécommande sont transmis de l'émetteur 30 au récepteur 25 par un canal de transmission 29 utilisant par exemple une liaison radio. On distingue généralement le canal 15 du canal 29 en nommant descendant le canal de transmission 15 de la station éloignée vers la station de base et en nommant montant le canal de transmission 29 de la station de base vers la station éloignée.

La télécommande du sélecteur 19 fonctionne de la façon suivante. A l'instant choisi dans la station de base 17, par exemple par un opérateur humain, l'organe de commande 31 transmet un ordre de déclenchement à l'organe de commande 24 par l'émetteur 30, le canal de transmission 29 et le récepteur 25. Lorsqu'il reçoit l'ordre de déclenchement, l'organe de commande 24 pilote le sélecteur 19 de façon à brancher sa sortie sur son entrée reliée aux moyens de restitution 23 par la liaison de transfert 27. L'organe de commande 24 déclenche alors les moyens de restitution 23 qui transfèrent au débit adapté, les données de la mémoire 21 vers l'émetteur 26 par les liaisons de transfert 27 et 28.

L'émetteur 26 transmet alors les données au débit adapté vers un récepteur 32 de la station de base 17 par le canal de transmission 15.

Dans l'exemple de réalisation de la figure 3, l'émetteur 26 comprend un modulateur et un étage d'adaptation au canal 15 dont les paramètres de fonctionnement sont positionnés par l'organe de commande 24.

Lorsque l'organe de commande 24 ne pilote pas le sélecteur 19 pour connecter la liaison de transfert 27 à la liaison de transfert 28, l'organe de commande 24 positionne en particulier les paramètres à des valeurs adaptées à la bande passante du canal de transmission 15 pour transmettre au débit utile réduit les données générées en temps réel.

La station de base 17 comprend des moyens d'enregistrement 33 et un sélecteur 34 reliés au récepteur 32 par un bus de transfert 35 sur lequel le récepteur 32 transfert les données reçues du canal de transmission 15 au débit auquel elles sont transmises depuis la station éloignée 16.

Les moyens d'enregistrement 33 sont agencés pour écrire dans une mémoire 36, les données qui circulent sur le bus de transfert 35 lorsque les moyens d'enregistrement 33 sont déclenchés par l'organe de commande 31.

L'organe de commande 31 peut déclencher les moyens d'enregistrement 33 en permanence tant que des données circulent sur le bus de transfert 35 ou plus particulièrement déclencher les moyens d'enregistrement 33 lorsque les données sont reçues par le récepteur 32 au débit adapté. Dans ce cas particulier, l'organe de commande 31 analyse la valeur du débit de données reçues par le récepteur 32.

La station de base 17 comprend des moyens de restitution 37 agencé pour lire des données de la mémoire 36 et transférer les données lues sur une liaison de transfert 38 lorsque les moyens de restitution 37 sont déclenchés par l'organe de commande 31. Le débit de lecture et de transfert est piloté par l'organe de commande 31 de façon à pouvoir prendre une valeur en particulier égale à celle du débit utile. La liaison de transfert 38 est reliée à une entrée du sélecteur 34. La sortie du sélecteur 34 est reliée à un réceptacle de données 39 par une liaison de transfert 40.

Le sélecteur est piloté par l'organe de commande 31 de façon à connecter la liaison de transfert 40 sur le bus de transfert 35 ou sur la liaison de transfert 38.

Le réceptacle de données 39 est par exemple un écran de visualisation ou un magnétoscope lorsque les données reçues dans la station de base concernent des images animées.

Le dispositif précédemment décrit est utilisable pour mettre en oeuvre le procédé conforme à l'invention.

Considérons par exemple le cas d'un vaisseau spatial, d'un robot ou d'un drone, c'est-à-dire d'un avion de reconnaissance sans pilote humain, utilisé pour explorer un site distant de la station de base 17. Le vaisseau spatial, le robot ou le drone constitue alors la station éloignée. Lorsque la station éloignée approche le site distant, la bande passante du canal de transmission 15 s'affaiblit. Les données observées au moyen d'une caméra 18 sont enregistrées dans la mémoire 21.

Lorsque la station éloignée revient vers la station de base en fin de mission, la bande passante du canal de transmission 15 s'améliore. A un instant choisi par un observateur humain situé dans la station de base 17, l'organe de commande 31 télécommande le sélecteur 19 et des moyens de restitution 23 pour transmettre les données enregistrées dans la station éloignée à la station de base avec le débit adapté à la bande passante du canal de transmission 15. Si la bande passante du canal de transmission 15 s'est suffisamment améliorée pour que les valeurs de débit utile et de débit adapté soient sensiblement égales, l'organe de commande 31 pilote le sélecteur 34 pour connecter directement le réceptacle de données 39, par exemple un écran, sur le récepteur 32 par la liaison de transfert 40 et le bus de transfert 35. Si la bande passante du canal de transmission 15 reste faible au point que la valeur de débit adapté soit inférieure à la valeur de débit utile, l'organe de commande 31 pilote les moyens d'enregistrement 33 pour mémoriser les données reçues dans la station de base. A un instant ultérieur, par exemple lorsque suffisamment de données ont été mémorisées, l'organe de commande 31 pilote les moyens de restitution 37 et le sélecteur 34 de façon à connecter le réceptacle de données 39 aux moyens de restitution 37 par les liaisons de transfert 40 et 38 pour transférer les données reçues au réceptacle de données avec le débit utile.

Il est ainsi possible d'observer en différé dans la station de base, des données numériques de bonne qualité avec un effet temps réel, indépendamment des conditions d'éloignement de la station éloignée.

## Revendications

1. Procédé pour transmettre sur un canal de transmission (15), des données numériques générées (1) en temps réel à un débit utile dans une station éloignée (16), à destination d'une station de base (17), **caractérisé en ce qu'**il comprend des actions consistant à :
- enregistrer (2) les dites données au débit utile dans la station éloignée ;
- sélectionner (3) à un instant choisi, un débit adapté à une bande passante du canal de transmission (15) ;
- restituer (4) au débit adapté, les dites données telles qu'elles ont été enregistrées dans la station éloignée (16) ;
- transmettre (5) sur le canal de transmission, lesdites données restituées.

2. Procédé selon la revendication 1, **caractérisé en ce qu'**il comprend des actions consistant à :
- sélectionner (6) avant l'instant choisi, le débit utile ;
- filtrer (42) les données à un débit utile réduit compatible avec la bande passante ;
- transmettre (7) au débit utile réduit sur le canal de transmission (15) les dites données générées en temps réel.

3. Procédé selon l'une des revendications 1 ou 2, **caractérisé en ce qu'**il comprend des actions consistant à réceptionner (10) dans la station de base les dites données au débit auquel elles sont transmises.

4. Procédé selon l'une des revendications 1 à 3, **caractérisé en ce qu'**il comprend des actions consistant à enregistrer (11) dans la station de base (17) lesdites données transmises au débit adapté.

5. Procédé selon la revendication 4, **caractérisé en ce qu'**il comprend des actions consistant à restituer (13) au débit utile, lesdites données telles qu'elles ont été enregistrées dans la station de base (17).

6. Procédé selon la revendication 5, **caractérisé en ce qu'**il comprend des actions consistant à réceptionner (14) dans la station de base les dites données au débit auquel elles sont restituées dans la station de base (17).

7. Dispositif pour transmettre sur un canal de transmission (15), des données numériques générées en temps réel à un débit utile dans une station éloignée (16), à destination d'une station de base (17), **caractérisé en ce qu'**il comprend dans la station éloignée (16) :
- une première mémoire (21) pour enregistrer les dites données au débit utile ;
- des premiers moyens (23) pour restituer les dites données enregistrées à un débit adapté à une bande passante du canal de transmission (15) ;
- un premier sélecteur (19) agencé pour être télécommandé à un instant choisi de façon à transmettre au débit adapté sur le canal de transmission (15), lesdites données restituées de la première mémoire (21).

8. Dispositif selon la revendication 7, **caractérisé en ce que** le premier sélecteur (19) est agencé pour transmettre au débit utile réduit lorsqu'il n'est pas télécommandé à l'instant choisi, les données numériques générées en temps réel, et **en ce qu'**il comprend un émetteur (26).

9. Dispositif selon la revendication 7 ou 8, **caractérisé en ce qu'**il comprend dans la station de base (17) une deuxième mémoire (36) pour enregistrer au moins lesdites données transmises au débit adapté.

10. Dispositif selon la revendication 9, **caractérisé en ce qu'**il comprend dans la station de base (17) des deuxièmes moyens (37) pour restituer au débit utile, lesdites données telles qu'elles ont été enregistrées dans la deuxième mémoire (36).

11. Dispositif selon l'une des revendications 7 ou 8, **caractérisé en ce qu'**il comprend dans la station de base (17) un deuxième sélecteur (34) pour réceptionner dans la station de base (17) les dites données au débit auquel elles sont transmises.

12. Dispositif selon la revendication 10, **caractérisé en ce qu'**il comprend dans la station de base (17) un deuxième sélecteur (34) pour réceptionner dans la station de base (17) les dites données au débit auquel elles sont restituées de la deuxième mémoire (36).
